# EUROPEAN PATENT SPECIFICATION

(11) **EP 2 029 947 B1**
(45) Date of publication and mention of the grant of the patent: **06.09.2017**
(21) Application number: 07748591.0
(22) Date of filing: 18.06.2007
(51) Int. Cl.: F25C 5/04, A01K 97/01, B25F 3/00, E21B 7/00, E21B 17/046, E21B 17/22

(54) **A CONNECTING DEVICE AND A TOOL**
VERBINDUNGSVORRICHTUNG UND WERKZEUG
DISPOSITIF DE RACCORDEMENT ET OUTIL

(30) Priority: 22.06.2006 SE 0601366
(43) Date of publication of application: 04.03.2009
(73) Proprietor: KL-TEHO OY, FI-41800 Korpilahti (FI)
(72) Inventor: NORLING, TORE, S-792 96 Våmhus (SE)
(74) Representative: Kolster Oy Ab
(86) International application number: PCT/SE2007/050431
(87) International publication number: WO 2007/149041

(56) References cited:
- WO-A1-2006/062453
- WO-A1-2006/062453
- US-A- 3 710 877
- US-A1- 2005 000 736
- US-A1- 2005 000 736
- US-B1- 6 705 412
- US-B1- 6 705 412

## Description

### FIELD OF THE INVENTION AND PRIOR ART

The present invention relates to a device for connecting a crank with the drill rod of a tool for drilling holes through thick outdoor ice, on lakes and the like, by driving the crank by hand, which comprises means for establishing a connection of mutual insertion of a shaft of said crank and an end of the drill rod as well as a first member for interlocking them in this position.

It is then theoretically possible that in such a connection the drill rod is intended to be inserted into and received in said crank shaft, but the circumstances are normally the opposite, inter alia depending upon that it is often from a grip point of view desired to have a smaller diameter of a rod forming said crank than of the drill rod. A device of this type is applicable to tools normally called ice drills, which is the reason for using this expression hereinafter.

Outdoor ice means here ice on lakes, rivers, oceans and the like, where a flowing water is present under the ice.

Such an ice drill is normally used for making holes through ice for fishing, such a jigging, but other intentions of the hole production are possible. Such ice drills may be designed to make holes with varying diameters, in which a typical diameter for such a hole is about 20 cm.

Ice drills may be intended to be driven to rotate by hand through such a crank, but there are also ice drills equipped with a motor for rotating the drill rod.

Such an ice drill has normally two cutting blades arranged with a spacing of 180° about the drill rod, but the invention is not in any way restricted to the number of cutting blades of such an ice drill or the arrangement of such blades, but it is directed to the very device for connecting a crank with the drill rod of such an ice drill.

Devices of the type defined in the introduction, which are provided with said means enabling removal of the crank for for example facilitating transport of the ice drill are already known like from WO 2006/062453. However, there is a desire to broaden the field of use of existing ice drills, and the present invention aims at doing so by providing a new construction of a device of the type defined in the introduction of such ice drills.

### SUMMARY OF THE INVENTION

The object of the present invention is to provide a device of the type defined in the introduction, which enables a broadened field of use of ice drills equipped with such a device.

This object is according to the invention obtained by providing such a device, in which said interlocking member is releasably arranged for removing the crank from the drill rod, said means are adapted to optionally establish a connection of mutual insertion of a motor shaft of a motor and said end of the drill rod instead of with the crank, and the device further comprises second members designed for locking the motor shaft with respect to the drill rod in this position for converting the tool between a tool for hand operated drilling and one for motor driven drilling.

Such a device enables a broadened field of use of an ice drill provided therewith, so that one and the same ice drill may be used both for hand driven and motor driven drilling, and two separate ice drills do not have to be carried along for being able to select the type of drilling most suitable in different situations. Neither will it be necessary to choose an ice drill of one of these types for avoiding such carrying along of two ice drills and by this in certain situations be forced to accept the type of ice drill being less suited. Furthermore, it involves a considerable saving of costs to be able to convert an ice drill from hand operation to motor operation instead of having a separate ice drill for each type of operation.

The advantage of an ice drill driven by hand is that it is less expensive to purchase than a motor driven ice drill and it is easier to carry. However, it is thanks to the device according to the invention possible to afterwards purchase a motor and convert the ice drill into a motor driven ice drill in situations when this is desired if the person who has bought the ice drill in a later occasion would be interested in acquiring a motor driven ice drill. An advantage of a motor driven ice drill is that considerably more holes may be drilled through a thick ice per time unit, such as during a day, and this drilling gets considerably less exhausting than with a hand driven ice drill. However, it may at some locations, such as on certain lakes or in certain regions of lakes, be prohibited to use a motor driven ice drill for environmental reasons, such as noise reasons, and an ice drill provided with the device according to the invention may then be easily converted to hand operation and holes be drilled in the ice through driving a said crank by hand. Accordingly, an ice drill provided with a device according to the invention is also very advantageous and interesting for the person who already from the beginning wishes to acquire a motor driven ice drill, since a said crank may simultaneously be acquired as a cheap accessory for enabling said conversion when desired.

According to an embodiment of the invention said means are designed to make locking of a said motor shaft to said end of a drill rod impossible without removing said locking members. Such a design of these means is very advantageous, since when using a motor of an ice drill no projecting parts may be present at the upper end of the drill rod, since these could get stuck in clothes or the like of the person handling the ice drill, and the locking members normally used and which probably would be most comfortable for locking a crank to the drill rod have a projecting part, such as preferably a knob being easy to grip without a tool for removing the crank from the drill rod.

According to another embodiment of the invention the device comprises a hollow end of a said drill rod with a cavity designed to optionally receive a crank rod of a said crank as well as a said motor shaft inserted thereinto for locking thereof with respect to the drill rod. Since the drill rod must be able to comfortably be connected to a said motor shaft, which preferably is almost solid, it is appropriate to design the drill rod to receive said crank rod and motor shaft, respectively.

According to another embodiment of the invention the cavity of said drill rod end has a circular cross-section, which is for manufacturing technical reasons advantageous, since the drill rod should have a circular cross-section.

According to another embodiment of the invention the cross-section of the cavity of the drill rod end is larger than the outer cross-section of a crank rod of a crank adapted to be received inside the drill rod end, and said crank rod is over a part thereof intended to at least partially be pushed into a said cavity for connecting the crank with a said drill rod provided with a circumferential plastic jacket with a certain elasticity so that the crank rod with plastic jacket shall obtain substantially the same cross-section dimension as said cavity. "Certain elasticity" means hear only that the plastic jacket shall not be made of a plastic material being substantially just as hard as the steel material from which the drill rod and the crank shaft are preferably manufactured. By arranging such a plastic jacket a bond between the crank rod and the drill rod which does not scratch as well as a smoother run through a more rigid connection at hand driven drilling is obtained. A crank rod of a crank may in this way also be built up to the correct dimension at the portion for inserting into a drill rod for obtaining a good fit at the same time as the rest of the crank will have a smaller dimension, which makes it easier to arrange comfortable handles on the crank, since in the case of the same dimension of the crank rod over the entire crank, which this has together with a plastic jacket, would mean that such handles would be unnecessarily thick and not perfect to grip around from considerations of convenience.

According to another embodiment of the invention said first and second locking members comprise transversal through-holes in the end of a said drill rod, in a crank rod of a said crank and in said motor shaft, said locking members comprise male elements, such as bolts, designed to be pushed through the holes when a said drill rod hole is covering a said crank rod hole or motor shaft hole for obtaining said interlocking, the drill rod has one or more first said holes for locking the crank rod and one or more second holes separated with respect to the first holes for locking the motor shaft, and the first and second holes differs with respect to shape and/or size. The risk of using the locking member for the crank for securing the motor shaft by mistake and by that accidents through catching clothing is by this excluded by simple means.

According to another embodiment of the invention the first and second holes have different sizes and have over at least parts thereof an inner thread for receiving said male elements with different diameters screwed thereinto for said locking a crank rod and a motor shaft to the drill rod end. It is by this reliably obtained that it is impossible to use the locking of the male element of the crank rod for locking a motor shaft to the drill rod end.

According to another embodiment of the invention said second holes in the drill rod intended for locking a motor shaft are arranged closest to the end limitation of the drill rod and said first holes for locking the crank rod are arranged on such a distance from said end limitation that a motor shaft inserted into the drill rod in the position for locking the motor shaft with respect to the drill rod projects beyond and covers said first holes for the crank rod and makes inserting of a said male element through the holes last mentioned impossible and the first holes are unreachable for covering thereof by a said motor shaft hole. The male member has by this for locking a crank to a said drill rod end to be removed and the hole or the holes intended for this male member may not be used for locking a motor shaft of a motor for an ice drill.

According to another embodiment of the invention the device comprises in said crank rod a plurality of said holes distributed over the length of the crank rod for locking the crank rod with the crank at different heights with respect to a drill rod. An adaption of the length of the ice drill with crank rod to the person to operate the ice drill may by this take place.

According to another embodiment of the invention the device comprises a handle designed to be arranged externally of said drill rod end for providing a grip for releasing and locking, respectively, crank or motor with respect to the drill rod. The gripping for converting the tool between a tool for hand driven and one for motor driven drilling are by this facilitated and made more comfortable.

The invention also relates to a tool for drilling holes through thick outdoor ice, on lakes and the like, according to the appended independent claim for such a tool, which comprises a device according to the invention. The advantages of such a tool appear as clearly as desired from the above description of the device according to the invention and embodiments thereof.

Further advantages as well as advantageous features of the invention appear from the following description.

### BRIEF DESCRIPTION OF THE DRAWINGS

With reference to the appended drawings, below follows a description of an embodiment of the invention cited as an example.

In the drawings:
- Fig 1: is a side elevation of an ice drill according to an embodiment of the invention,
- Fig 2: is an enlarged exploded view of a device according to the invention included in the ice drill according to Fig 1 in a position for connecting a crank with the drill rod of the ice drill,
- Fig 3: is a partially sectioned view of that part of the ice drill according to Fig 1 which has said device for hand driven drilling, in a state in which a crank is connected with the drill rod,
- Fig 4: is a view corresponding to Fig 3 of the device when connecting a motor shaft with the drill rod for motor driven drilling, and
- Fig 5: is a view of the upper part of the ice drill according to the invention with a motor connected to the drill rod in accordance with Fig 4 for motor driven drilling.

### DETAILED DESCRIPTION OF AN EMBODIMENT OF THE INVENTION

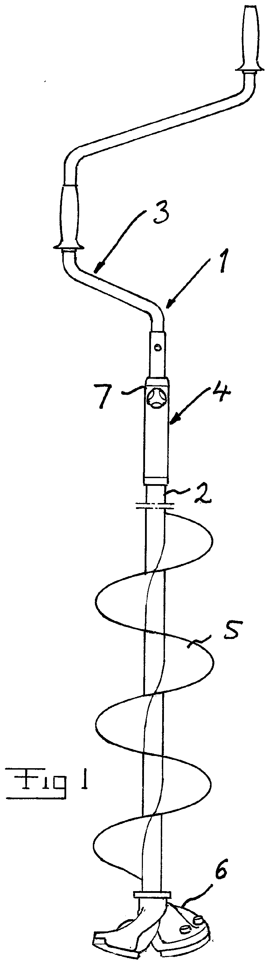

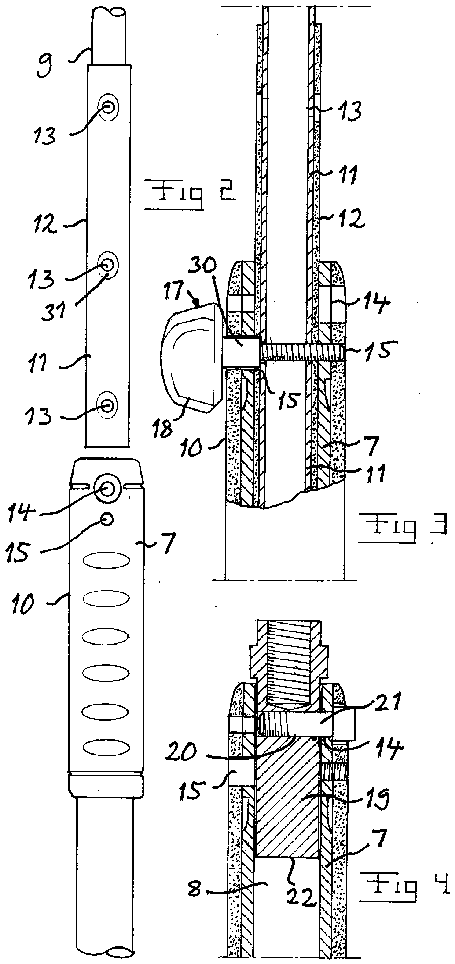

An ice drill 1 according to an embodiment of the present invention is illustrated in Fig 1. This has a central rigid drill rod 2, which for example is made of stainless steel or surface treated steel. A crank 3 is removably secured to the upper part of the drill rod through a device 4 according to the invention for making it possible to by hand power drive the drill rod 2 to rotate around the axis thereof for drilling. A spiral 5 extends around the drill rod from the region of a bore crown 6 and upwards for lifting crushed ice formed by drilling. The device 4 for connecting the crank 3 with the drill rod 2 constitutes the very core of the invention and will now be described while simultaneously referring to Figs 2-4. The drill rod end 7 is hollow and has an inner cavity 8 with a larger diameter than the outer diameter of the crank rod 9 itself. The drill rod end 7 is provided with a handle arranged externally thereof for providing a hand grip when releasing or loosening and securingly locking, respectively, a crank or motor with respect to the drill rod in the way to be described further below. The handle 10 is preferably made of a suitable plastic material with a suitable profile.

The crank rod is over a part 11 thereof intended to be at least partially inserted into said cavity 8 of the drill rod end 7 for connecting the crank with the drill rod provided with a circumferential plastic jacket 12 with a certain elasticity so that the crank rod with the plastic jacket may obtain substantially the same cross-section dimension as the cavity 8.

Furthermore, that part 11 of the crank rod 9 which is intended to be inserted into the cavity of the drill rod end has a plurality of transversal through-holes 13 distributed over the length of the crank rod for locking the crank rod with the crank at different heights with respect to a drill rod in the way to be described further below.

The drill rod end 7 is provided with on one hand a second transversal hole 14 for locking a motor shaft to the drill rod end and on the other a first transversal hole 15 for locking a crank with respect to the drill rod end. The second hole 14 has a larger inner diameter than the first hole 15. The second hole 14 is located closer to the end limitation 16 of the drill rod end than the first hole 15. The two holes 14, 15 are arranged to be in covering alignment with a corresponding hole of a motor shaft and a crank rod, respectively, so as to through pushing a male element through the holes thus covering each other lock the drill rod with respect to the motor and the crank, respectively. The principle for such an interlocking, for which the design of the size of the holes 14, 15 and their location is decisive, will now be explained with reference made to Figs 3 and 4.

Fig 3 shows how an end part 11 of a crank may be pushed into the cavity 8 of the drill rod end so that any of the holes 13 will come into alignment with the first hole 15 and then a male element 17 provided with a knob 18 may be screwed through the holes 13, 15 for obtaining an efficient locking. The hole 15 is provided with an inner thread co-operating with an outer thread of the male element 17. The element 17 may with a sleeve-like portion 30 of plastic material, as well as the knob, come to bear against the very steel material of the end part 11 of the crank by the fact that the material is removed from the plastic jacket 12 around the holes 13 thereof for exposing portions 31 of the crank rod 9. A steady locking through a steel-plastic connection is obtained by this.

If the ice drill is now to be converted into a motor driven ice drill the male element 17 is to be screwed out of the hole 15, so that the crank rod part 11 may be pulled out of the drill rod end. A motor shaft 19 is after that, as shown in Fig 4, pushed into the cavity 8 of the drill rod end until a transversal hole 20 in the motor shaft arrives to covering alignment with said second hole 14 in the drill rod end, whereupon a male element 21 is screwed into the hole 14 for locking the motor shaft with respect to the drill rod end. The male element 21 is designed to lock the motor shaft to the drill rod end by means of a head being countersunk in the hole 14, so that no part of the male element projects outside the drill rod in the locking position.

The male element 17 with the protruding knob 18 may not by mistake be pushed into the hole 14 for locking the motor shaft, since the diameter of the second hole 14 is larger than the diameter of the first hole 15. Furthermore, the distance between the second hole 14 and the first hole 15 as well as the distance between the transversal hole 20 in the motor shaft 19 and the end 22 of the motor shaft are so adapted to each other that the motor shaft 19 in the locked position according to Fig 4 will extend beyond the first hole 15 and make an introduction of the male element thereinto or maintaining a male element 17 inserted therein impossible. The first hole 15 is at the same time located at such a distance from the end limitation 16 of the drill rod end that it may not be reached and be brought to cover the transversal hole 20 in the motor shaft for unintentionally locking the motor shaft with respect to the drill rod through the male element 17.

Accordingly, there is no risk that the male element 17 with the protruding knob 18 may still remain at the drill rod end 7 after a motor with motor shaft has been locked through the drill rod end for motor operation of the ice drill.

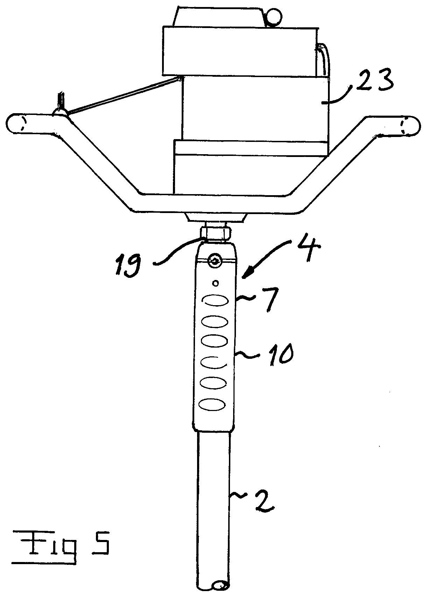

Fig 5 shows what the upper part of the ice drill 1 according to the invention may look like when it has been chosen to connect the motor 23 with the drill rod instead of the crank.

The function of the ice drill and the connecting device according to the invention and the quick and comfortable way of changing between hand operation and motor operation of the ice drill appear as clearly as possible from the description above.

The drill rod end may for example have more than one said first hole for locking a crank thereto.

It would also be possible to provide the inner cavity of the drill rod end as well as corresponding parts of the crank rod end and the motor shaft with different cross-section shapes than a circular cross-section shape, such as for example a square one.

The crank rod itself may also have the same outer cross-section as the cross-section of the cavity of the drill rod.

## Claims

1. A device for connecting a crank (3) with the drill rod (2) of a tool for drilling a hole though outdoor ice, on lakes and the like, by driving the crank by hand, which comprises means for establishing a connection of mutual insertion of a shaft (11) of said crank and an end (7) of the drill rod as well as first members (17) for interlocking them in this position,
said interlocking member is releasably arranged for removing the crank from the drill rod, that said means are adapted to optionally establish a connection of mutual insertion of a motor shaft (19) of a motor and said end of the drill rod instead of with the crank, **characterized in that** the device further comprises second members (21) designed for locking the motor shaft with respect to the drill rod in this position for converting the tool between a tool for hand operated drilling and one for motor driven drilling.

2. A device according to claim 1, **characterized in that** said means are adapted to make locking of a said motor shaft (19) to said end (7) of a drill rod impossible without removing said first interlocking means (17).

3. A device according to claim 1 or 2, **characterized in that** it comprises a hollow end (7) of a said drill rod with a cavity (8) designed to optionally receive a crank rod (9) of a said crank (3) as well as a said motor shaft (19) inserted thereinto for locking thereof with respect to the drill rod.

4. A device according to claim 3, **characterized in that** the cavity (8) of said drill rod end has a circular cross-section.

5. A device according to claim 3 or 4, **characterized in that** the cross-section of the cavity (8) of the drill rod end is larger than the outer cross-section of a crank rod (9) of a crank designed to be received inside said drill rod end, and that said crank rod is over a part thereof intended to be at least partially inserted into said cavity (8) for connecting the crank with a said drill rod provided with a circumferential plastic jacket (12) with a certain elasticity so that the crank rod with plastic jacket shall obtain substantially the same cross-section dimension as said cavity.

6. A device according to any of the preceding claims, **characterized in that** said first and second locking members comprise transversal through-holes (14, 15, 13, 20) in the end (7) of a said drill rod, in a crank rod (9) of a said crank and in said motor shaft (19), that said locking members comprise male elements (17, 21), such as bolts, designed to be pushed through the holes when a said drill rod hole is covering a said crank rod hole or motor shaft hole for obtaining said interlocking, that the drill rod has one or more first said holes (15) for locking the crank rod and one or more second holes (14) separated with respect to the first holes for locking the motor shaft, and that the first and second holes differs with respect to shape and/or size.

7. A device according to claim 6, **characterized in that** the first (15) and second (14) holes have different sizes and have over at least parts thereof an inner thread for receiving said male elements (17, 21) with different diameters screwed thereinto for said locking of a crank rod (9) and a motor shaft (19) to the drill rod end (7).

8. A device according to claim 6 or 7, **characterized in that** said second holes (14) in the drill rod intended for locking a motor shaft (19) are arranged closest to the end limitation (16) of the drill rod and said first holes (15) for locking the crank rod (9) are arranged on such a distance from said end limitation that a motor shaft inserted into the drill rod in the position for locking the motor shaft with respect to the drill rod projects beyond and covers said first holes for the crank rod and makes inserting of a said male element through the holes last mentioned impossible and the first holes (15) are unreachable for covering thereof by a said motor shaft hole (20).

9. A device according to any of claims 6-8, **characterized in that** it comprises in said crank rod (9) a plurality of said holes (13) distributed over the length of the crank rod for locking the crank rod with the crank at different heights with respect to a drill rod.

10. A device according to any of the preceding claims, **characterized in that** it comprises a handle (10) designed to be arranged externally of said drill rod end (7) for providing a hand grip when loosening and locking, respectively, crank (3) or motor (23) with respect to the drill rod.

11. A tool for drilling a hole through thick outdoor ice, on lakes and the like, which comprises a central drill rod (2) with a spiral (5) extending therearound for lifting crushed ice formed when drilling, a carrier (6) secured to one end of the drill rod and having at least one cutting blade fixed with respect to the drill rod and extending substantially radially with a cutting edge for cutting and by that drilling into the ice when rotating the drill rod as well as a crank connected to the drill rod for drilling a rod through the ice by driving the crank by hand, **characterized in that** it comprises a device (4) according to any of claims 1-10.

## Patentansprüche

1. Vorrichtung zum Verbinden einer Kurbel (3) mit der Bohrstange (2) eines Werkzeugs zum Bohren eines Loches durch Eis im Außenraum, auf Seen und dergleichen, durch Antreiben der Kurbel mit der Hand, die Mittel zum Einrichten einer Verbindung wechselseitigen Einführens einer Welle (11) der Kurbel und eines Endes (7) der Bohrstange wie auch erste Glieder (17) zum diese miteinander in dieser Stellung Verriegeln umfasst,
wobei das Verriegelungsglied lösbar zum Entfernen der Kurbel von der Bohrstange angeordnet ist, wobei die Mittel dafür angepasst sind, wahlweise anstatt mit der Kurbel eine Verbindung wechselseitigen Einführens einer Motorwelle (19) eines Motors und des Endes der Bohrstange einzurichten,
**dadurch gekennzeichnet, dass**
die Vorrichtung ferner zweite Glieder (21) umfasst, die zum Verriegeln der Motorwelle in dieser Stellung in Bezug auf die Bohrstange zum Umwandeln des Werkzeugs zwischen einem Werkzeug zum handbetriebenen Bohren und einem zum motorgetriebenen Bohren gestaltet sind.

2. Vorrichtung nach Anspruch 1, **dadurch gekennzeichnet, dass** die Mittel dafür angepasst sind, Verriegeln der Motorwelle (19) mit dem Ende (7) einer Bohrstange ohne Entfernen der ersten Verriegelungsmittel (17) unmöglich zu machen.

3. Vorrichtung nach Anspruch 1 oder 2, **dadurch gekennzeichnet, dass** sie ein hohles Ende (7) der Bohrstange mit einer Kavität (8) umfasst, die dafür gestaltet ist, wahlweise eine Kurbelstange (9) der Kurbel (3) wie auch die Motorwelle (19) zu empfangen, die zum Verriegeln dieser in Bezug auf die Bohrstange darin eingeführt sind.

4. Vorrichtung nach Anspruch 3, **dadurch gekennzeichnet, dass** die Kavität (8) des Bohrstangenendes einen kreisförmigen Querschnitt hat.

5. Vorrichtung nach Anspruch 3 oder 4, **dadurch gekennzeichnet, dass** der Querschnitt der Kavität (8) des Bohrstangenendes größer als der äußere Querschnitt einer Kurbelstange (9) einer Kurbel ist, die dafür gestaltet ist, innerhalb des Bohrstangenendes empfangen zu werden, und dass die Kurbelstange über einem Teil derer, der dafür vorgesehen ist, mindestens teilweise in die Kavität (8) zum Verbinden der Kurbel mit der Bohrstange eingeführt zu werden, mit einem umlaufenden Kunststoffmantel (12) mit einer bestimmten Elastizität versehen ist, sodass die Kurbelstange mit Kunststoffmantel im Wesentlichen dieselbe Querschnittsabmessung wie die Kavität erhalten soll.

6. Vorrichtung nach einem der vorstehenden Ansprüche, **dadurch gekennzeichnet, dass** die ersten und zweiten Verriegelungsglieder transversale Durchgangslöcher (14, 15, 13, 20) in dem Ende (7) der Bohrstange, in einer Kurbelstange (9) der Kurbel und in der Motorwelle (19) umfassen, dass die Verriegelungsglieder männliche Elemente (17, 21), wie beispielsweise Bolzen, umfassen, die dafür gestaltet sind, zum Erhalten des Verriegelns durch die Löcher gedrückt zu werden, wenn das Bohrstangenloch das Kurbelstangenloch oder das Motorwellenloch bedeckt, dass die Bohrstange ein oder mehrere erste Löcher (15) zum Verriegeln der Kurbelstange und ein oder mehrere in Bezug auf die ersten Löcher separierte zweite Löcher (14) zum Verriegeln der Motorwelle hat, und dass die ersten und zweiten Löcher sich in Bezug auf Form und/oder Größe voneinander unterscheiden.

7. Vorrichtung nach Anspruch 6, **dadurch gekennzeichnet, dass** die ersten (15) und zweiten (14) Löcher unterschiedliche Größen haben und über mindestens Teile ihrer ein Innengewinde zum darin eingeschraubten Empfangen der männlichen Elemente (17, 21) mit unterschiedlichen Durchmessern für das Verriegeln einer Kurbelstange (9) und einer Motorwelle (19) mit dem Bohrstangenende (7) haben.

8. Vorrichtung nach Anspruch 6 oder 7, **dadurch gekennzeichnet, dass** die zweiten Löcher (14) in der Bohrstange, die zum Verriegeln einer Motorwelle (19) vorgesehen sind, am nächsten zu der Endbegrenzung (16) der Bohrstange angeordnet sind und die ersten Löcher (15) zum Verriegeln der Kurbelstange (9) in einem solchen Abstand von der Endbegrenzung angeordnet sind, dass eine Motorwelle, die in die Bohrstange eingeführt ist, in der Stellung zum Verriegeln der Motorwelle in Bezug auf die Bohrstange über die ersten Löcher für die Kurbelstange hervorsteht und diese bedeckt und Einführen des männlichen Elements durch die letztgenannten Löcher unmöglich macht und die ersten Löcher (15) zum Bedecken dieser durch das Motorwellenloch (20) unerreichbar sind.

9. Vorrichtung nach einem der Ansprüche 6-8, **dadurch gekennzeichnet, dass** sie in der Kurbelstange (9) eine Vielzahl der Löcher (13) umfasst, die zum Verriegeln der Kurbelstange mit der Kurbel in unterschiedlichen Höhen in Bezug auf eine Bohrstange über die Länge der Kurbelstange verteilt sind.

10. Vorrichtung nach einem der vorstehenden Ansprüche, **dadurch gekennzeichnet, dass** sie eine Handhabe (10) umfasst, die dafür gestaltet ist, zum Bereitstellen eines Handgriffs beim Lösen und Verriegeln von entsprechend Kurbel (3) oder Motor (23) in Bezug auf die Bohrstange außerhalb des Bohrstangenendes (7) angeordnet zu sein.

11. Werkzeug zum Bohren eines Loches durch dickes Eis im Außenraum, auf Seen und dergleichen, das eine zentrale Bohrstange (2) mit einer Spirale (5), die sich um diese zum Anheben von beim Bohren zerkleinertem Eis herum erstreckt, einen Träger (6), der an einem Ende der Bohrstange gesichert ist und mindestens eine Schneidklinge, die in Bezug auf die Bohrstange fest ist und sich mit einer Schneidkante zum Schneiden und dadurch Bohren in das Eis während des Drehens der Bohrstange im Wesentlichen radial erstreckt, hat, wie auch eine Kurbel, die mit der Bohrstange zum Bohren einer Stange durch das Eis durch Antreiben der Kurbel mit der Hand umfasst, **dadurch gekennzeichnet, dass** es eine Vorrichtung (4) nach einem der Ansprüche 1-10 umfasst.

## Revendications

1. Dispositif pour relier une manivelle (3) à la tige de forage (2) d'un outil pour forer un trou dans de la glace extérieure, sur des lacs et analogues, en entraînant la manivelle à la main, qui comprend un moyen pour établir une connexion par insertion mutuelle d'un arbre (11) de ladite manivelle et d'une extrémité (7) de la tige de forage aussi bien que de premiers éléments (17) pour les enclencher dans cette position,
ledit élément d'enclenchement est agencé de façon amovible pour enlever la manivelle de la tige de forage, en ce que ledit moyen est conçu pour établir de manière facultative une connexion par insertion mutuelle d'un arbre moteur (19) d'un moteur et ladite extrémité de la tige de forage au lieu d'avec la manivelle, **caractérisé en ce que**
le dispositif comprend en outre des seconds éléments (21) conçus pour verrouiller l'arbre moteur par rapport à la tige de forage dans cette position pour transformer l'outil entre un outil pour forage à la main et un outil pour forage au moteur.

2. Dispositif selon la revendication 1, **caractérisé en ce que** ledit moyen est conçu pour rendre le verrouillage d'un dit arbre moteur (19) à ladite extrémité (7) d'une tige de forage impossible sans enlever ledit premier moyen d'enclenchement (17).

3. Dispositif selon la revendication 1 ou 2, **caractérisé en ce qu'**il comprend une extrémité creuse (7) d'une dite tige de forage avec une cavité (8) conçue pour recevoir de manière facultative une tige de manivelle (9) d'une dite manivelle (3) aussi bien qu'un dit arbre moteur (19) inséré en son sein pour verrouillage de ce dernier par rapport à la tige de forage.

4. Dispositif selon la revendication 3, **caractérisé en ce que** la cavité (8) de ladite extrémité de tige de forage a une section transversale circulaire.

5. Dispositif selon la revendication 3 ou 4, **caractérisé en ce que** la section transversale de la cavité (8) de l'extrémité de tige de forage est plus grande que la section transversale extérieure d'une tige de manivelle (9) d'une manivelle conçue pour être reçue à l'intérieur de ladite extrémité de tige de forage, et **en ce que** ladite tige de manivelle est sur une partie de celle-ci destinée à être au moins partiellement insérée dans ladite cavité (8) pour relier la manivelle à une dite tige de forage munie d'une gaine en plastique circonférentielle (12) avec une certaine élasticité de sorte que la tige de manivelle avec la gaine en plastique parviendra sensiblement à la même dimension en section transversale que ladite cavité.

6. Dispositif selon l'une quelconque des revendications précédentes, **caractérisé en ce que** lesdits premier et second éléments de verrouillage comprennent des trous traversants transversaux (14, 15, 13, 20) dans l'extrémité (7) d'une dite tige de forage, dans une tige de manivelle (9) d'une dite manivelle et dans ledit arbre moteur (19), **en ce que** lesdits éléments de verrouillage comprennent des éléments mâles (17, 21), comme des boulons, conçus pour être poussés à travers les trous quand une dite tige de forage couvre un dit trou de tige de manivelle ou trou d'arbre moteur pour obtenir ledit enclenchement, **en ce que** la tige de forage a un ou plusieurs dits premiers trous (15) pour verrouiller la tige de manivelle et un ou plusieurs seconds trous (14) séparés par rapport aux premiers trous pour verrouiller l'arbre moteur, et **en ce que** les premiers et seconds trous diffèrent en ce qui concerne la forme et/ou la taille.

7. Dispositif selon la revendication 6, **caractérisé en ce que** les premiers (15) et seconds (14) trous ont des tailles différentes et ont au moins sur des parties de ces derniers un filetage intérieur pour recevoir lesdits éléments mâles (17, 21) avec des diamètres différents vissés en leur sein pour ledit verrouillage d'une tige de manivelle (9) et d'un arbre moteur (19) à l'extrémité de tige de forage (7).

8. Dispositif selon la revendication 6 ou 7, **caractérisé en ce que** lesdits seconds trous (14) dans la tige de forage destinés à verrouiller un arbre moteur (19) sont agencés au plus près de la limitation d'extrémité (16) de la tige de forage et lesdits premiers trous (15) pour verrouiller la tige de manivelle (9) sont agencés à une telle distance de ladite limitation d'extrémité qu'un arbre moteur inséré dans la tige de forage dans la position pour verrouiller l'arbre moteur par rapport à la tige de forage dépasse au-delà et couvre lesdits premiers trous pour la tige de manivelle et rend l'insertion d'un dit élément mâle à travers les trous précédemment mentionnés impossible et les premiers trous (15) sont inaccessibles pour couvrir ces derniers par un dit trou d'arbre moteur (20).

9. Dispositif selon l'une quelconque des revendications 6-8, **caractérisé en ce qu'**il comprend dans ladite tige de manivelle (9) une pluralité de dits trous (13) répartis sur la longueur de la tige de manivelle pour verrouiller la tige de manivelle avec la manivelle à des hauteurs différentes par rapport à une tige de forage.

10. Dispositif selon l'une quelconque des revendications précédentes, **caractérisé en ce qu'**il comprend une poignée (10) conçue pour être agencée à l'extérieur de ladite extrémité de tige de forage (7) pour fournir une prise manuelle en respectivement desserrant et verrouillant la manivelle (3) ou le moteur (23) par rapport à la tige de forage.

11. Outil pour forer un trou dans de la glace extérieure épaisse, sur des lacs et analogues, qui comprennent une tige de forage centrale (2) avec une spirale (5) s'étendant autour de cette dernière pour soulever la glace broyée formée en forant, un support (6) fixé à une extrémité particulière de la tige de forage et ayant au moins une lame de coupe fixe par rapport à la tige de forage et s'étendant sensiblement de façon radiale avec un bord de coupe pour la coupe et de ce fait forant dans la glace en faisant tourner la tige de forage aussi bien qu'une manivelle reliée à la tige de forage pour forer un bâtonnet à travers la glace en entraînant la manivelle à la main, **caractérisé en ce qu'**il comprend un dispositif (4) selon l'une quelconque des revendications 1-10.
